# EUROPÄISCHE PATENTSCHRIFT

(11) **EP 2 480 863 B1**
(45) Veröffentlichungstag und Bekanntmachung des Hinweises auf die Patenterteilung: **24.07.2013**
(21) Anmeldenummer: 10736964.7
(22) Anmeldetag: 04.06.2010
(51) Int. Cl.: G01D 5/00, G01N 3/02

(54) **KRAFTMESSKOPF FÜR PRÜFGERÄTE**
FORCE MEASURING HEAD FOR TEST DEVICES
TÊTE DE MESURE DE FORCE POUR APPAREILS DE CONTRÔLE

(30) Priorität: 24.09.2009 DE 102009042478
(43) Veröffentlichungstag der Anmeldung: 01.08.2012
(73) Patentinhaber: Zwick GmbH & Co. Kg, 89079 Ulm (DE)
(72) Erfinder: VÖLZKE, David, 89075 Ulm (DE)
(74) Vertreter: Dziewior, Joachim
(86) Internationale Anmeldenummer: PCT/DE2010/000641
(87) Internationale Veröffentlichungsnummer: WO 2011/035749

(56) Entgegenhaltungen:
- GB-A- 533 247
- SU-A1- 781 667
- US-A- 5 133 210

## Beschreibung

Die Erfindung betrifft einen Kraftmesskopf für Prüfgeräte zur Durchführung von Werkstoffprüfungen, mit einem in einem Messkopfgehäuse angeordneten Kraftaufnehmer, der kraftschlüssig mit einem Prüfwerkzeug in Verbindung steht.

Soweit Werkstoffmessungen unter erschwerten Umgebungsbedingungen, insbesondere bei erhöhten Temperaturen mit hoher Präzision durchgeführt werden sollen, muss sichergestellt sein, dass der Kraftaufnehmer gegen derartige Temperaturen geschützt ist. Eine Erhöhung der Temperatur im Kraftaufnehmer führt nicht nur zu einer Veränderung seiner physikalischen Eigenschaften und damit zu Messfehlern, sondern kann im schlimmsten Fall auch seine Zerstörung zur Folge haben.

Der Erfindung liegt daher die Aufgabe zugrunde, einen Kraftmesskopf der eingangs genannten Art so auszugestalten, dass er auch insbesondere unter erhöhten Temperaturen und Messbedingungen zuverlässig und mit hoher Genauigkeit arbeitet.

Diese Aufgabe wird nach der Erfindung dadurch gelöst, dass der Kraftaufnehmer von einem wärmeisolierenden Abschirmkörper ummantelt ist und mit dem Prüfwerkzeug über wenigstens ein zwischengeschaltetes Wärmespeicherelement verbunden ist.

Der durch die Erfindung erreichte Vorteil besteht im Wesentlichen darin, dass durch den den Kraftaufnehmer ummantelnden Abschirmkörper sowie das zum Prüfwerkzeug hin zwischengeschaltete Wärmespeicherelement erhöhte Temperaturen zumindest für einen vergleichsweise langen Messzeitraum von dem Kraftaufnehmer ferngehalten werden.

In bevorzugter Ausführungsform der Erfindung ist der Abschirmkörper als zylindrisches Hülsenteil ausgebildet und auf seiner dem Prüfwerkzeug zugewandten Seite durch eine mit einer Durchgangsbohrung versehene Bodenplatte geschlossen. Auf diese Weise wird eine sehr wirksame Abschirmwirkung insbesondere zur Richtung des Prüfwerkzeugs hin erreicht.

Vorteilhafterweise ist hierbei der Abschirmkörper innerhalb des Messkopfgehäuses feststehend angeordnet.

Weiter hat es sich im Rahmen der Erfindung als vorteilhaft erwiesen, wenn der Abschirmkörper vom vorzugsweise schaumförmigen Isolationsmaterial gebildet ist.

Um eine Wärmeabschirmung auch gegenüber dem Prüfwerkzeug effektiv zu bewirken, ist ein erstes Wärmespeicherelement innerhalb des Abschirmkörpers angeordnet, das mit seiner Außenmantelfläche der Innenwand des Abschirmkörpers mit allenfalls geringem Abstand wärmedichtend gegenübersteht. Hierdurch ist ein unmittelbarer Wärmefluss vom Prüfwerkzeug zum Kraftaufnehmer unterbunden.

Des Weiteren kann das Wärmespeicherelement einen wärmeisolierend ausgebildeten Federdorn tragen, der sich durch die Durchgangsbohrung im Abschirmkörper erstreckt.

Eine weitere Verbesserung der Wärmeabschirmwirkung wird erreicht, wenn der Federdorn mit seinem dem Wärmespeicherelement abgewandten Ende an einen haubenförmigen, der Abschirmung dienenden Zentrierkonus angeschlossen ist, der die vom Prüfwerkzeug eingeleitete Kraft auf den Federdorn überträgt und der mit seinem Rand eine am Abschirmkörper ausgebildete Ringschulter mit geringem Abstand umschließt.

Eine maximale Abschirmwirkung des Kraftaufnehmers wird erreicht, wenn der Kraftaufnehmer auf seiner dem Wärmespeicherelement abgewandten Seite ebenfalls mit einem Wärmeisolationselement versehen ist.

Um auch Wärmeleitungseffekte vom Prüfgerät zum Kraftmesskopf zu unterbinden, schlägt die Erfindung weiter vor, dass zur Verbindung des Messkopfgehäuses mit dem Rahmen des Prüfgeräts wenigstens ein weiteres Wärmespeicherelement vorgesehen ist.

Eine weitere vorteilhafte Ausgestaltung der Erfindung ist dadurch gekennzeichnet, dass der Federdorn mit einem Überlastungsschutz für den Kraftaufnehmer versehen ist, der von einem vorgespannten Federpaket gebildet ist.

Dabei kann das Federpaket auf einem Ringflansch des Federdorns angeordnet und von einem Zentrierteil unter Vorspannung gegen den Ringflansch gepresst werden, wobei das Zentrierteil mit einem Außengewinde versehen ist, das mit dem Innengewinde einer den Ringflansch zusammen mit dem Federpaket umgreifenden Überwurfmutter verschraubt ist.

Schließlich empfiehlt es sich im Rahmen der Erfindung, dass das Wärmespeicherelement, der Zentrierkonus sowie der Federdorn aus Hartmetall, Verbundmaterial oder dergleichen geeignetem Werkstoff bestehen.

Im folgenden wird die Erfindung an einem in der Zeichnung dargestellten Ausführungsbeispiel näher erläutert; es zeigen:

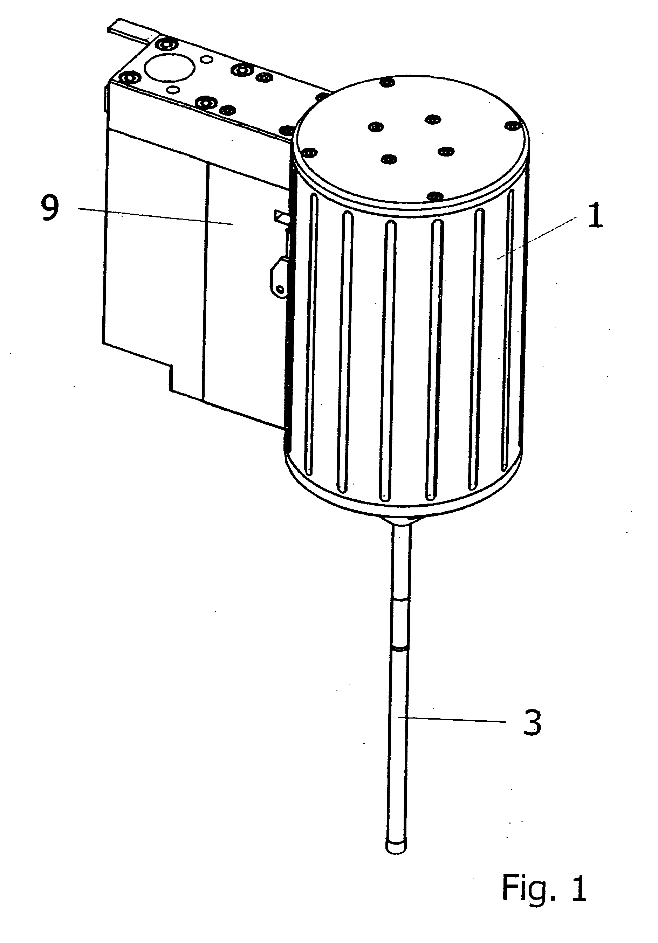

- Fig. 1: eine perspektivische Darstellung des erfindungsgemäßen Kraftmesskopfes,
- Fig. 2: eine Schnittdarstellung des Gegenstands nach Fig. 1,
- Fig. 3: eine Detaildarstellung zu der Vorrichtung gemäß Fig. 2.

Der in der Zeichnung dargestellte Kraftmesskopf ist vorgesehen für Prüfgeräte zur Durchführung von Werkstoffprüfungen und besteht aus einem in einem Messkopfgehäuse 1 angeordneten Kraftaufnehmer 2, der kraftschlüssig mit einem Prüfwerkzeug 3 in Verbindung steht.

Da derartige Werkstoffprüfungen häufig an erwärmtem Material vorgenommen werden, wobei die dort zur Anwendung kommenden Temperaturen mehrere 100 C° betragen können, ist es erforderlich, den Kraftaufnehmer 2 vor einer übermäßigen Erwärmung zu schützen, da dies nicht nur Messfehlern, sondern darüber hinaus auch zu seiner Zerstörung führen kann.

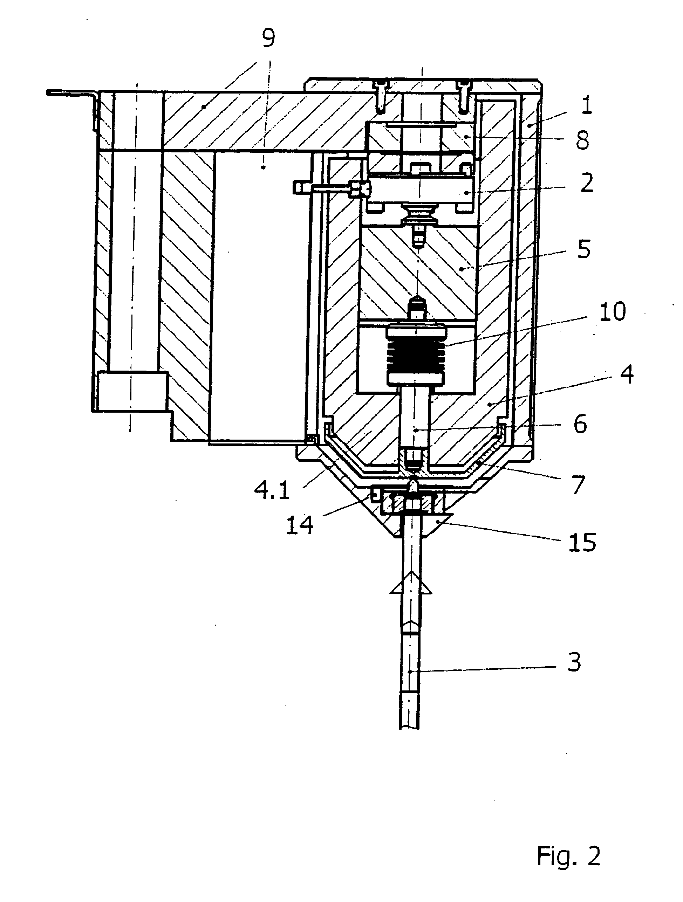

Um dies zu erreichen, ist der Kraftaufnehmer 2, wie insbesondere in Figur 2 zu sehen, von einem wärmeisolierenden Abschirmkörper 4 ummantelt und darüber hinaus mit dem Prüfwerkzeug 3 über wenigstens ein zwischengeschaltetes Wärmespeicherelement 5 verbunden.

Der Abschirmkörper 4 ist im Einzelnen als zylinderisches Hülsenteil ausgebildet und auf seiner dem Prüfwerkzeug 3 zugewandten Seite durch ein mit einer Durchgangsbohrung versehenes Bodenteil 4.1 geschlossen. Dieser Abschirmkörper 4 ist innerhalb des Messkopfgehäuses 1 feststehend angeordnet und vorzugsweise von schaumförmigen Isolationsmaterial gebildet.

Innerhalb dieses Abschirmkörpers 4 ist ein erstes Wärmespeicherelement 5 angeordnet, das mit seiner Außenmantelfläche der Innenwand des Abschirmkörpers 4 mit allenfalls geringem Abstand wärmedichtend gegenübersteht, so dass ein seitlicher Wärmefluss am Wärmespeicherelement 5 vorbei verhindert wird.

Dieses erste Wärmespeicherelement 5 trägt einen wärmeisolierend ausgebildeten Federdorn 6, der sich durch die Durchgangsbohrung im Abschirmkörper 4 erstreckt. An seinem dem Wärmespeicherelement 5 abgewandten Ende ist der Federdorn 6 an einen haubenförmigen, ebenfalls der Abschirmung dienenden Zentrierkonus 7 angeschlossen, der die vom Prüfwerkzeug 3 eingeleitete Kraft auf dem Federdorn 6 überträgt. Dieser Zentrierkonus 7 umschließt mit seinem Rand eine am Abschirmkörper 4 ausgebildete Ringschulter mit geringem Abstand, so dass auch hier eine gute Wärmeisolierung erreicht wird.

Wie sich weiter der Figur 2 entnehmen lässt, ist der Kraftaufnehmer 2 auf seiner dem Wärmespeicherelement 5 abgewandten Seite ebenfalls mit einem Wärmeisolationselement 8 versehen.

Zur Verbindung des Messkopfgehäuses 1 mit dem Rahmen des Prüfgerätes ist wenigstens ein weiteres Wärmespeicherelement 9 vorgesehen, so dass auch auf diesem Wege wärmeleitende Effekte weitestgehend vermieden werden.

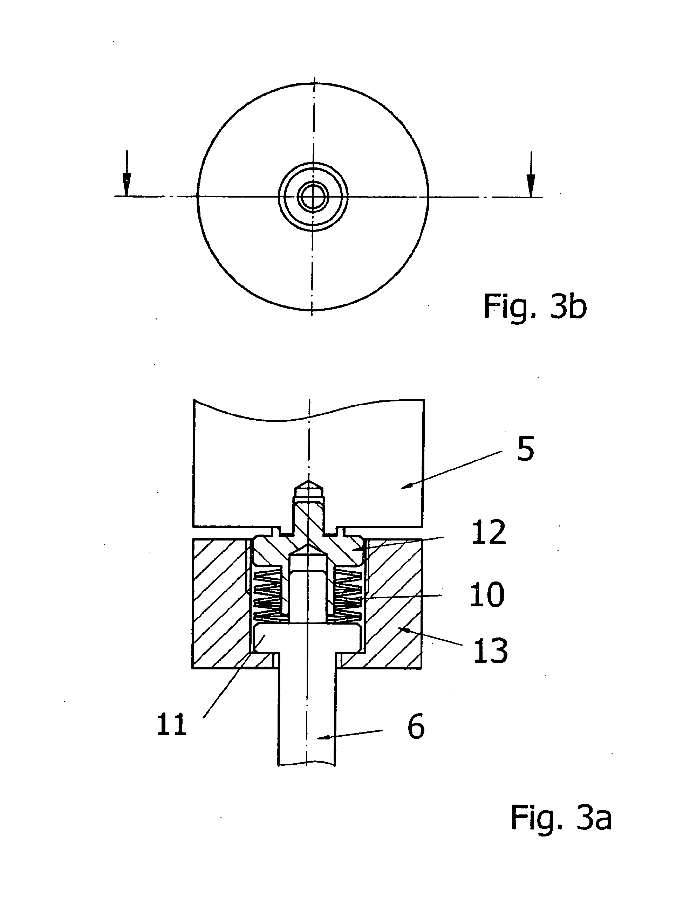

Der Federdorn 6 ist im Übrigen mit einem Überlastungsschutz für den Kraftaufnehmer 2 versehen, der von einem vorgespannten Federpaket 10 gebildet ist. Wie sich der Figur 3 im Einzelnen entnehmen lässt, ist das Federpaket 10 auf einem Ringflansch 11 des Federdorns 6 angeordnet und wird von einem Zentrierteil 12 unter Vorspannung gegen den Ringflansch 11 gepresst. Das Zentrierteil 12 ist hierbei mit einem Außengewinde versehen, das mit einem korrespondierenden Innengewinde einer Überwurfmutter 13 verschraubt ist, wobei die Überwurfmutter 13 den Ringflansch 11 zusammen mit dem Federpaket 10 umgreift.

Das Wärmespeicherelement 5, der Zentrierkonus 7 sowie der Federdorn 6 sind hinsichtlich ihrer Materialeigenschaften derart zu gestalten, dass sie einerseits die notwendige Wärmeisolierung gewährleisten, andererseits die geforderte Härte aufweisen. Hierzu bietet sich insbesondere Hartmetall, Verbundmaterial oder dergleichen geeigneter Werkstoff an.

Schließlich ist der Kraftmesskopf noch mit einem Sensor 14 in der Nähe der Aufhängung 15 des Prüfwerkzeugs 3 versehen, mit welchem sichergestellt werden kann, dass das jeweilige Werkzeug ordnungsgemäß vom Benutzer eingelegt wurde.

## Patentansprüche

1. Kraftmesskopf für Prüfgeräte zur Durchführung von Werkstoffprüfungen, mit einem in einem Messkopfgehäuse (1) angeordneten Kraftaufnehmer (2), der kraftschlüssig mit einem Prüfwerkzeug (3) in Verbindung steht, **dadurch gekennzeichnet, daß** der Kraftaufnehmer (2) von einem wärmeisolierenden Abschirmkörper (4) ummantelt ist und mit dem Prüfwerkzeug (3) über wenigstens ein zwischengeschaltetes Wärmespeicherelement (5) verbunden ist.

2. Kraftmesskopf nach Anspruch 1, **dadurch gekennzeichnet, daß** der Abschirmkörper (4) als zylindrisches Hülsenteil ausgebildet ist und auf seiner dem Prüfwerkzeug (3) zugewandten Seite durch ein mit einer Durchgangsbohrung versehenes Bodenteil geschlossen ist.

3. Kraftmesskopf nach Anspruch 1 oder 2, **dadurch gekennzeichnet, daß** der Abschirmkörper (4) innerhalb des Messkopfgehäuses (1) feststehend angeordnet ist.

4. Kraftmesskopf nach einem der Ansprüche 1 bis 3, **dadurch gekennzeichnet, daß** der Abschirmkörper (4) von vorzugsweise schaumförmigem Isolationsmaterial gebildet ist.

5. Kraftmesskopf nach einem der Ansprüche 1 bis 4, **dadurch gekennzeichnet, daß** ein erstes Wärmespeicherelement (5) innerhalb des Abschirmkörpers (4) angeordnet ist, das mit seiner Aussenmantelfläche der Innenwand des Abschirmkörpers (4) mit allenfalls geringem Abstand wärmedichtend gegenübersteht.

6. Kraftmesskopf nach einem der Ansprüche 1 bis 5, **dadurch gekennzeichnet, daß** das erste Wärmespeicherelement (5) einen wärmeisolierend ausgebildeten Federdorn (6) trägt, der sich durch die Durchgangsbohrung im Abschirmkörper (4) erstreckt.

7. Kraftmesskopf nach Anspruch 6, **dadurch gekennzeichnet, daß** der Federdorn (6) mit seinem dem Wärmespeicherelement (5) abgewandten Ende an einen haubenförmigen, der Abschirmung dienenden Zentrierkonus (7) angeschlossen ist, der die vom Prüfwerkzeug (3) eingeleitete Kraft auf den Federdorn (6) überträgt und der mit seinem Rand eine am Abschirmkörper (4) ausgebildete Ringschulter mit geringem Abstand umschließt.

8. Kraftmesskopf nach einem der Ansprüche 1 bis 7, **dadurch gekennzeichnet, daß** der Kraftaufnehmer (2) auf seiner dem Wärmespeicherelement (5) abgewandten Seite ebenfalls mit einem Wärmeisolationselement (8) versehen ist.

9. Kraftmesskopf nach einem der Ansprüche 1 bis 8, **dadurch gekennzeichnet, daß** zur Verbindung des Messkopfgehäuses (1) mit dem Rahmen des Prüfgeräts wenigstens ein weiteres Wärmespeicherelement (.9) vorgesehen ist.

10. Kraftmesskopf nach einem der Ansprüche 6 bis 9, **dadurch gekennzeichnet, daß** der Federdorn (6) mit einem Überlastungsschutz für den Kraftaufnehmer (2) versehen ist, der von einem vorgespannten Federpaket (10) gebildet ist.

11. Kraftmesskopf nach Anspruch 10, **dadurch gekennzeichnet, daß** das Federpaket (10) auf einem Ringflansch (11) des Federdorns (6) angeordnet ist und von einem Zentrierteil (12) unter Vorspannung gegen den Ringflansch (11) gepreßt wird, wobei das Zentrierteil (12) mit einem Außengewinde versehen ist, das mit dem Innengewinde einer den Ringflansch (14) zusammen mit dem Federpaket (10) umgreifenden Überwurfmutter (13) verschraubt ist.

12. Kraftmesskopf nach einem der Ansprüche 1 bis 11, **dadurch gekennzeichnet, daß** das Wärmespeicherelement (5), der Zentrierkonus (7) sowie der Federdorn (6) aus Hartmetall, Verbundmaterial oder dergleichen geeignetem Werkstoff bestehen.

## Claims

1. A force measuring head for test devices for carrying out material test operations, comprising a force sensor (2) arranged in a measuring head housing (1) and connected to a test tool (3) in force-locking relationship, **characterised in that** the force sensor (2) is encased by a heat-insulating shielding body (4) and is connected to the test tool (3) by way of at least one interposed heat storage element (5).

2. A force measuring head according to claim 1 **characterised in that** the shielding body (4) is in the form of a cylindrical sleeve member and is closed on its side towards the test tool (3) by an end portion provided with a through bore.

3. A force measuring head according to claim 1 or claim 2 **characterised in that** the shielding body (4) is arranged stationarily within the measuring head housing (1).

4. A force measuring head according to one of claims 1 to 3 **characterised in that** the shielding body (4) is formed by a preferably foam insulating material.

5. A force measuring head according to one of claims 1 to 4 **characterised in that** arranged within the shielding body (4) is a first heat storage element (5) which is in opposite relationship with its outside peripheral surface to the inside wall of the shielding body (4) with at most a slight spacing in heat-sealing relationship.

6. A force measuring head according to one of claims 1 to 5 **characterised in that** the first heat storage element (5) carries a heat-insulating spring pin (6) extending through the through bore in the shielding body (4).

7. A force measuring head according to claim 6 **characterised in that** the spring pin (6) is connected with its end remote from the heat storage element (5) to a cap-shaped centering cone (7) serving for shielding purposes, which transmits the force applied by the test tool (7) to the spring pin (6) and which with its edge surrounds an annular shoulder on the shielding body (4) at a small spacing.

8. A force measuring head according to one of claims 1 to 7 **characterised in that** the force sensor (2) is also provided with a heat insulating element (8) on its side remote from the heat storage element (5).

9. A force measuring head according to one of claims 1 to 8 **characterised in that** there is provided at least one further heat storage element (9) for connecting the measuring head housing (1) to the frame of the test device.

10. A force measuring head according to one of claims 6 to 9 **characterised in that** the spring pin (6) is provided with an overload protection for the force sensor (2), that is formed by a prestressed spring pack (10).

11. A force measuring head according to claim 10 **characterised in that** the spring pack (10) is arranged on an annular flange (11) of the spring pin (6) and is pressed in a prestressed condition against the annular flange (11) by a centering member (12), wherein the centering member (12) is provided with a male thread which is screwed to the female thread of a cap nut (13) surrounding the annular flange (14) together with the spring pack (10).

12. A force measuring head according to one of claims 1 to 11 **characterised in that** the heat storage element (5), the centering cone (7) and the spring pin (6) comprise hard metal, composite material or the like suitable material.

## Revendications

1. Tête de mesure de force pour des appareils de contrôle destinés à effectuer des contrôles de matériaux, avec un enregistreur de force (2) disposé dans un boîtier de tête de mesure (1), qui se trouve en connexion par friction avec un outil de contrôle (3), **caractérisée en ce que** l'enregistreur de force (2) est enveloppé par un corps de protection thermo-isolant (4) et est relié à l'outil de contrôle (3) par au moins un élément intermédiaire d'accumulation de chaleur (5).

2. Tête de mesure de force selon la revendication 1, **caractérisée en ce que** le corps de protection (4) se présente sous la forme d'une partie de manchon cylindrique et est fermé sur son côté tourné vers l'outil de contrôle (3) par une partie de fond munie d'un perçage traversant.

3. Tête de mesure de force selon la revendication 1 ou 2, **caractérisée en ce que** le corps de protection (4) est disposé de façon immobile à l'intérieur du boîtier de tête de mesure (1).

4. Tête de mesure de force selon l'une quelconque des revendications 1 à 3, **caractérisée en ce que** le corps de protection (4) est formé de préférence de matériau d'isolation sous forme de mousse.

5. Tête de mesure de force selon l'une quelconque des revendications 1 à 4, **caractérisée en ce qu'**un premier élément d'accumulation de chaleur (5) est disposé à l'intérieur du corps de protection (4) et est opposé de façon étanche à la chaleur par sa surface latérale extérieure à la paroi intérieure du corps de protection (4), tout au plus avec une faible distance.

6. Tête de mesure de force selon l'une quelconque des revendications 1 à 5, **caractérisée en ce que** le premier élément d'accumulation de chaleur (5) porte une broche à ressort thermo-isolante (6), qui s'étend à travers le perçage traversant dans le corps de protection (4).

7. Tête de mesure de force selon la revendication 6, **caractérisée en ce que** la broche à ressort (6) est reliée par son extrémité éloignée de l'élément d'accumulation de chaleur (5) à un cône de centrage en forme de hotte (7) servant de protection, qui transmet la force introduite par l'outil de contrôle (3) à la broche à ressort (6) et qui entoure par son bord, avec une faible distance, un épaulement annulaire formé sur le corps de protection (4).

8. Tête de mesure de force selon l'une quelconque des revendications 1 à 7, **caractérisée en ce que** l'enregistreur de force (2) est également muni d'un élément d'accumulation de chaleur (8) sur son côté éloigné de l'élément d'accumulation de chaleur (5).

9. Tête de mesure de force selon l'une quelconque des revendications 1 à 8, **caractérisée en ce qu'**il est prévu, pour la liaison du boîtier de tête de mesure (1) avec le châssis de l'appareil de contrôle, au moins un autre élément d'accumulation de chaleur (9).

10. Tête de mesure de force selon l'une quelconque des revendications 6 à 9, **caractérisée en ce que** la broche à ressort (6) est munie d'une protection contre la surcharge pour l'enregistreur de force (2), qui est formée par un paquet de ressorts précontraint (10).

11. Tête de mesure de force selon la revendication 10, **caractérisée en ce que** le paquet de ressorts (10) est disposé sur une bride annulaire (11) de la broche à ressort (6) et est pressé par une pièce de centrage (12) avec précontrainte contre la bride annulaire (11), dans laquelle la pièce de centrage (12) est munie d'un filet extérieur, qui est vissé avec le filet intérieur d'un écrou d'accouplement (13) entourant en même temps la bride annulaire (11) et le paquet de ressorts (10).

12. Tête de mesure de force selon l'une quelconque des revendications 1 à 11, **caractérisée en ce que** l'élément d'accumulation de chaleur (5), le cône de centrage (7) ainsi que la broche à ressort (6) sont constitués de métal dur, de matériau composite ou d'un matériau analogue approprié.
